# EUROPEAN PATENT APPLICATION

(11) **EP 3 643 589 A1**
(43) Date of publication of application: **29.04.2020**
(21) Application number: 19204306.5
(22) Date of filing: 21.10.2019
(51) Int. Cl.: B62D 55/075, B25J 5/00, B25J 15/06, B62D 55/116, B66C 1/02, B66C 23/36, B66C 23/70, B66F 9/065, B66F 9/075, B66F 9/18, B66C 13/40

(54) **A SELF-PROPELLED LIFTING MACHINE**

(30) Priority: 22.10.2018 DK PA201870688
(71) Applicant: Industriparken 1, Bredsten ApS, 7182 Bredsten (DK)
(72) Inventor: Faurskov, Jesper Piihl, 6640 Lunderskov (DK)
(74) Representative: Zacco Denmark A/S

(57) **Abstract**

A self-propelled lifting machine (10) is disclosed comprising a housing (2) with a chassis (20) and a base (4) rotatably connected to the chassis (20) of the housing (2), wherein the base (4) includes one or more adjusting means for varying the angle (α) between said base (4) and said housing (2), the lifting machine further comprising a controller configured for selecting and maintaining an angular position of said housing (2) relative to a horizontal plane by means of controlling said adjusting means, the lifting machine (10) further comprising a work tool holder (1) having a lifting boom part (11) being pivotally connected to the housing (2), and a work tool (5) suitable for holding a building element (B), wherein the work tool (5) at least in some operational positions extends beyond the chassis (20) in the horizontal plane.

## Description

The present invention concerns a self-propelled lifting machine for lifting and transporting a building element such as a window.

It is known to use different types of mobile lifting machines for lifting a building element. The mobile lifting machine comprises a lifting boom connected to the chassis of the mobile lifting machine. The mobile lifting machine would in most cases have four individual wheels connected to the chassis for allowing the mobile lifting machine to be moved inside or outside the building on a construction site. A hydraulic cylinder is typically used for operating and moving the lifting boom relative to the chassis of the mobile lifting machine and the lifting boom is fitted in one end with a gripping mechanism for holding a building element to be mounted on a building on a construction site. The lifting boom and the gripping mechanism are so constructed that the gripping mechanism in some operational positions extends beyond the chassis in the horizontal plane for e.g. picking up building elements and for positioning the building elements at the required position at the building.

It is an object of the present invention to improve the speed with which such mobile lifting machines can lift and transport building elements from the storage position to the required positions at the building or buildings.

### Brief description of the present invention

By the present invention is has been realised that a major factor in improving the working speed of the mobile lifting machine is the ability of the mobile lifting machine to operate fast on uneven surfaces, inclined or sloping surfaces or even staircases on the construction site. When operating on such surfaces, the operator must take good care that tilting of the mobile lifting machine carrying a building element by its work tool, such as a gripping mechanism due to the condition of the surface will not cause the lifting machine to overturn. This can be achieved e.g. by selecting an operating route for the lifting machine with less inclination of the surface, by moving the work tool and the building element closer to the horizontal centre of the chassis or by providing a sufficiently large counterweight on the chassis.

By the present invention according to claim 1, the self-propelled lifting machine comprises a base that includes one or more adjusting means for varying the angle (α) between the base and the housing, the lifting machine further comprising a controller configured for selecting and maintaining an angular position of said housing relative to a horizontal plane by means of controlling said adjusting means. Hereby, the chassis and housing, on which the lifting boom carrying the work tool is connected, can be kept horizontal irrespectfully of the condition of the surface at the construction site, and the building elements can be picked up by means of the work tool extending beyond the chassis, transported by the shortest accessible route to the position where the building element should be installed and then be positioned into the required place at the building with requirement for e.g. shortening the lifting boom or raising the lifting boom to move the building element closer to the horizontal centre of the chassis before movement of the lifting machine in order to avoid that the possible inclination of the chassis in the direction in which the boom extends can displace the centre of gravity of the lifting machine and cause it to overturn.

Self-levelling platforms are known per se, but combining that technology according to claim 1 with self-propelled lifting machines of the kind described herein provides advantages with respect to improving the speed with which the lifting machine can operate. However, other advantages of the present invention will become evident.

By using a self-propelled lifting machine with a base being pivotally connected to the housing, it is possible to achieve a base, which can maintain the housing in a predetermined angular position. The base is realized by using one or more adjustment elements to compensate for any inclination.

By using a controller arranged on the self-propelled lifting machine, it is possible to control the adjusting means for varying the angle between said base and housing, as the controller is configured for selecting and maintaining an angular position of said housing relative to a horizontal plane. The adjustment elements would in one preferred embodiment include a hydraulic actuator connected to the base for varying the angle between said base and the housing.

The self-propelled lifting machine according to a preferred embodiment of the invention is further more advantageous as, the machine will be able to operate in a terrain, the 2-axis leveling enables the machine to perform a stable and safe handling of a building element on slopes, stairs and terrain, the base automatic always allows the machine to be driven as if the machine was driven on a surface being parallel with a horizontal plane.

The invention provides a self-propelled lifting machine having a lifting boom, which preferably can be inclined in any direction, in order to carry out lifting operations even when the self-propelled lifting machine is resting on slopes or another inclined surface. The length of boom may preferably furthermore be adjusted or modified by means of telescopic second boom part, hereby increasing the attainable range, while permitting changes in the tread too, in order to facilitate the transport of machine on the one hand, and particular lifting operations on the other hand.

The self-propelled lifting machine combines superior lifting capacity and range with a unique and compact design of the base and the self-propelled lifting machine can in preferred embodiments handle items up to 1500 kg in a horizontal position extending beyond the chassis, allowing transport through narrow hallways and elsewhere on the construction site where space is limited. The low weight of the self-propelled lifting machine makes it possible to use it in locations, where heavy machinery cannot be used due to their higher load.

The self-propelled lifting machine can be used for lifting, handling and transporting different work tools used in the construction industries as the self-propelled lifting machine has a coupling mechanism arranged on the lifting boom for carrying a work tool.

The self-propelled lifting machine is used for lifting and transporting building elements such as window facade elements and the self-propelled lifting machine is configured to be operated either by using a panel connected to the self-propelled lifting machine or via a remote control unit.

In a preferred embodiment of the self-propelled lifting machine according to the first aspect of the present invention, the work tool holder comprises a boom part pivotally connected to the housing at the second end of the first boom part, an actuator interposed in between the housing and the boom part, and a coupling mechanism for coupling a work tool to the first boom part at a first end of the work tool holder. This is advantageous as it provides a work tool holder, which can be used for different types of handling tasks on a construction site.

In a preferred embodiment of the self-propelled lifting machine according to the first aspect of the present invention, said base includes a number of endless track members and a support member rotatably connected to the housing, where said endless track members are pivotably connected to the support member. This is advantageous as it provides the base with a number of endless track members that allows the self-propelled lifting machine to be operated in a terrain, where the soil is soft and the pressure per square feet has to be low to avoid the base getting stock in the terrain. By using a base comprising one or more endless track members it allows each track to rest on different levels.

In a preferred embodiment of the self-propelled lifting machine according to the first aspect of the present invention, wherein the first part of the work tool holder includes at least one telescopic second boom part arranged between the first end and the second end. This is advantageous as it provides a work tool holder with an additional boom element, which increases the work range of the self-propelled lifting machine.

In a preferred embodiment of the self-propelled lifting machine according to the first aspect of the present invention, the endless track members are individually suspended by a number of suspension elements and the suspension elements being connected to said endless track members and the support member. This is advantageous as it provide the possibility for operating the self-propelled lifting machine on a surface having different plateaus such as a staircase. Due to the automatic levelling, the machine always works safely (and stable) regardless of the angle of the chassis (undercarriage). Other belt-driven machines must first be levelled with support legs before they can curl securely / stable. There is no need for support legs, which is often the case with other belt driven machines, which are usually equipped with support legs that level the machine relative to a horizontal plane.

In a preferred embodiment of the self-propelled lifting machine according to the first aspect of the present invention, the housing includes a chassis allowing the housing to turn in relation to the base. This is advantageous as it provides a connection allowing the housing to swivel relative to the base of the self-propelled lifting machine.

In a preferred embodiment of the self-propelled lifting machine according to the first aspect of the present invention, the work tool includes suction cups being arranged on a fixture having a first coupling part being connectable with the coupling mechanism on the first or second boom part of the work tool holder and the self-propelled lifting machine further includes a pneumatic system having a vacuum pump connected to the suction cups and the vacuum pump being used for creating vacuum. This is advantageous as it provides the self-propelled lifting machine with an additional system, which can operate the gripping means in the form of suction cups, which are advantageous when it comes to handling of windows, glass element or other fragile elements.

In a preferred embodiment of the self-propelled lifting machine according to the first aspect of the present invention, an electrical power source supplies the self- propelled lifting machine with electrical power for operating the hydraulic system including a hydraulic pump for supplying hydraulic fluid to the hydraulic actuator for varying the angle between said base and said housing. This is advantageous as it provides an on-board power supply which is sufficient for operating the hydraulic system more specifically the hydraulic pump for delivering hydraulic fluid the hydraulic actuators on the self-propelled lifting machine.

In a preferred embodiment of the self-propelled lifting machine according to the first aspect of the present invention, the base further includes a first connecting base part complimenting the second connecting part of the chassis arranged on the lower face of the housing.

In the context of the present invention, the term "building element" refers to windows, plasterboards, steel plates, wooden plates, tiles, fire doors. It is furthermore with the scope of the present invention to handle building elements having a substantially planar surface.

### Brief description of the drawing

The invention will be better understood on reading the description which follows, given solely by way of non-limiting examples and with reference to the drawing, in which:
FIG. 1 shows a schematic side view of the self-propelled lifting machine.
FIG. 2 shows a first perspective view of the self-propelled lifting machine of FIG. 1.
FIG. 3 is a close-up view of the base of the self-propelled lifting machine of FIG. 2.
FIG. 4 is a schematic third view of the crane of FIG. 1 and FIG. 3.
FIG. 5 is an enlarged view of the coupling mechanism shown in FIG. 3.
FIG. 6 is an enlarged view the base shown in FIG. 3.
FIG. 7 is an enlarged view of the coupling mechanism shown in FIG. 3.
FIG.8 shows a second perspective view of the self-propelled lifting machine shown in FIG. 1.

In the remainder of this description, the term "horizontal plane" designates a plane parallel to the direction y. The terms "lower" and "longitudinal" are defined with reference to a working condition of use of the self-propelled lifting machine.

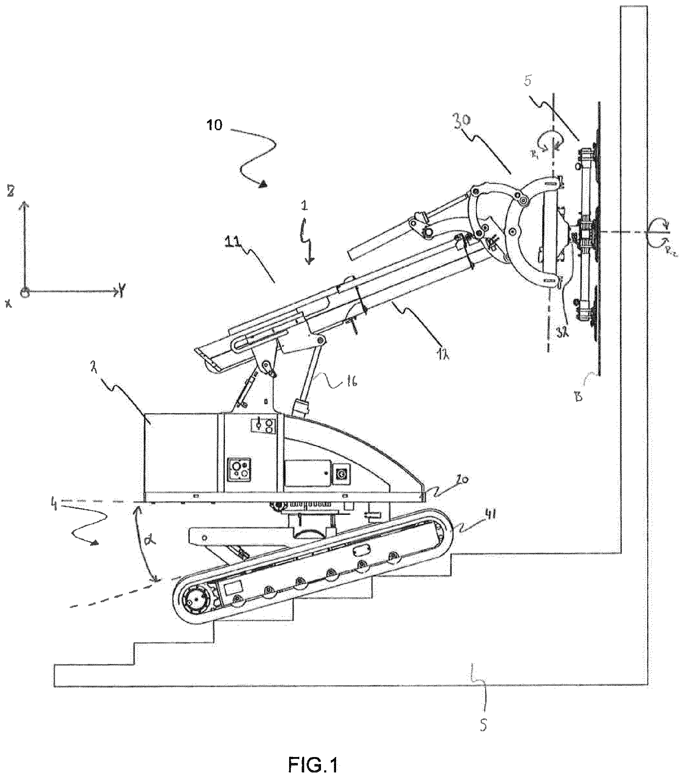

In the shown embodiments in FIG. 1-8 of the present invention, the self-propelled lifting machine 10 comprises base 4 connected to the housing 2 of the self-propelled lifting machine.

FIGS 1-2 illustrate a self-propelled lifting machine 10 according to the invention under a working condition of use. The self-propelled lifting machine 10 comprises a housing 2 with a chassis 20 mounted on the base 4. The self-propelled lifting machine 10 is designed to have the work tool holder 1 also referred to as a lifting boom connected to the housing 2 of the self-propelled lifting machine for allowing the lifting boom to pivot relative to the housing.

The housing 2 includes a rear part mounted on the chassis 20 and the rear part is used for the batteries for powering the electric motor, a charging device for these batteries, a hydraulic unit, a vacuum reserve, and a control unit of the self-propelled lifting machine 10.

An electrical power source supplies the self- propelled lifting machine with electrical power for operating the hydraulic system including a hydraulic pump for supplying hydraulic fluid to the hydraulic actuator 42 for varying the angle between said base 4 and said housing 2.

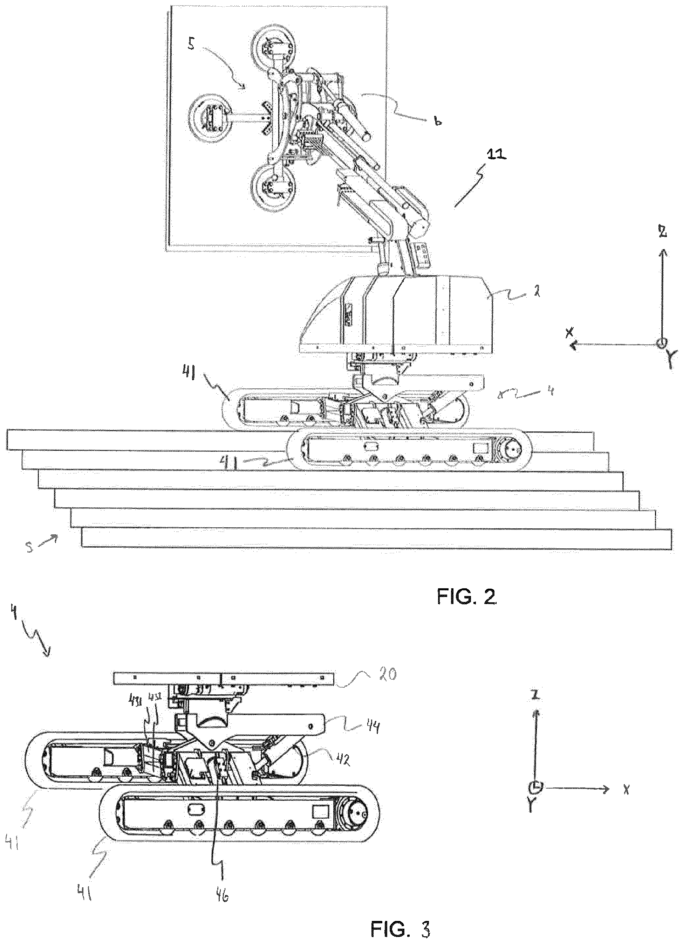

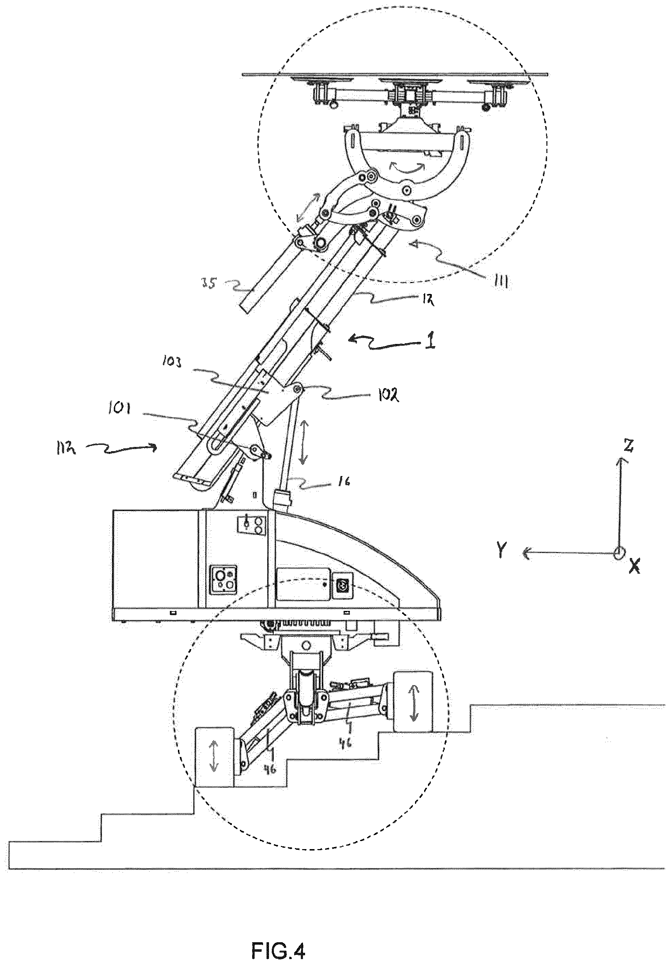

Referring now to the Figs. 1 and 2, it can be seen how the self-propelled lifting machine is able to operate on a surface more specifically on a surface having different plateaus such as a staircase S. Each plateau includes a surface on which the propulsion means (endless track element) are resting (shown in FIG. 2 and 4) The work tool holder comprises a boom part 11, an actuator 16 interposed in between the housing 2 and the boom part 11, and a coupling mechanism 30 for coupling a work tool 5 to the first boom part 11 at a first end 111 of the work tool holder 1 pivotally connected to the housing 2 at the second end 112 of the first boom part 11.

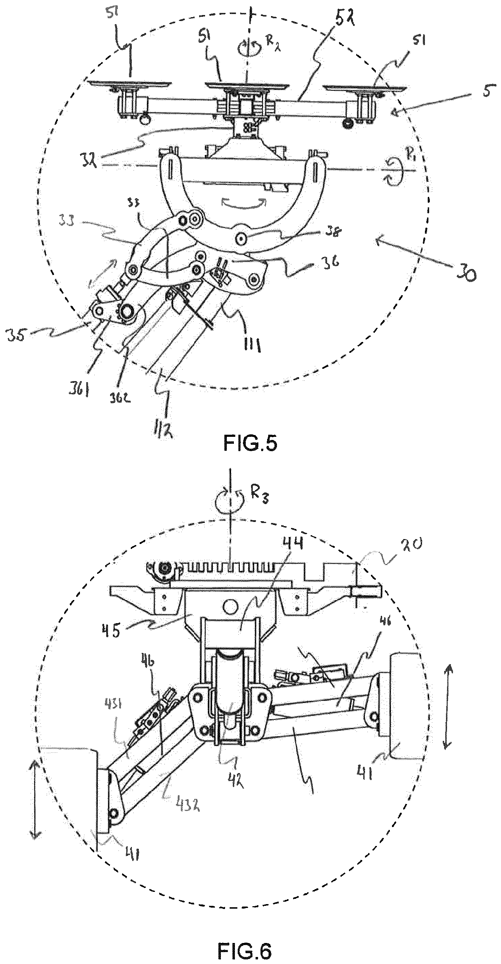

Referring now to the FIGS 2-4 and 6, the endless track members 41 are individually suspended by a number of suspension elements (shown in FIG. 6) and the suspension elements (shown in FIG. 3) are connected to the endless track members 41 and the support member 44. This is advantageous as it provides the possibility of operating the self-propelled lifting machine on a surface having different plateaus such as a staircase.

The work tool 5 can be rotated about a first axis R₁ parallel to the Z direction and a second axis R₂ parallel to the Y direction, this provides the option to rotate the building element (B) 360 degrees about the second axis R₂ and the work tool itself can be rotated 180 degrees about the first axis R₁ relative to the position shown in FIG. 1.

Referring now to FIGS. 3, 4 and 6, a third hydraulic cylinder 46 is used for raising and lowering the endless track member 41 and the third hydraulic cylinder 46 is arranged on each side of the support member 44. The two third hydraulic cylinders 46 positioned on each side of the support member 44 are connected to the hydraulic system of the self-propelled lifting machine 10.

Referring now to the Fig 3, the base 4 includes a number of endless track members 41 and a support member 44 rotatably connected to the housing 2, where said endless track members are pivotably connected to the support member 44. Each endless track member 41 comprises a train pinions and at least one of the pinions will be coupled to motor whereas the rest of pinions are drawn by rotation of the flexible element, which could be made from a rubber material.

Referring now to the Fig. 4, it can be seen how the work tool holder 1 is connected to the housing 2 of the self-propelled lifting machine on a fixed pivot point 101 and a hydraulic driving cylinder-piston 16 is connected to a plate 103 arranged on the work tool holder 1. The work tool holder 1 has a boom part 11 that can be turned on its own pivot point 101, while the related hydraulic cylinder 16 is moved between a retracted and an extended position, which is indicated by the arrow in FIG. 4.

Referring now to the Figs. 5, 7 and 8 the coupling mechanism 30 can be turned about the pivot point 38, thereby obtaining a wider range of work tool motions, either vertically and horizontally, according to the positions taken by the lever linkage elements 33. The lever linkage elements 33 can be moved by means of second hydraulic cylinder 35, which is connected to one end 362 of a lever 36, and said lever 36 being fixed to the first end 111 of the boom part 11. A pair of u-shaped levers 31 are provided for turning the coupling mechanism 30 about the pivot point 38. The work tool holder 1 includes at least one telescopic second boom part 12 arranged between the first end 111 and the second end 112 of the work tool holder 1.

In Fig. 5, the work tool 5 is shown in a position, where the work tool 5 is rotated 45 degrees about the pivot axis 38 and the coupling part 32 of the coupling mechanism 30 is facing upwards. In the position shown in FIG. 5, the work tool 5 can be rotated substantially 180 degrees about the first axis R₁ and more than 360 degrees about the second axis R_{2.}

The work tool includes suction cups 51 arranged on a fixture 52 and the fixture includes a second coupling part, which is connectable with coupling part 32 arranged on the coupling mechanism 30. The self-propelled lifting machine includes a pneumatic system with a vacuum pump and the vacuum pump is connected via a number of flexible tubes with the suction cups. As the suction cups 51 are fluidly connected to the vacuum supply, it is possible to create an air gap between the suction cups 51 and an object handled by these suction cups 51. The vacuum pump is by no means limited to be used only for creating vacuum as the vacuum pump can also be used in relation to the coupling part 32 of the coupling. The work tool 5 also includes other type of gripping means such as mechanical gripping arms, which would enable the lifting machine to handle a building element B.

Referring now to Fig. 6, the base 4 further includes a first connecting base part 45 complimenting the second connecting part of the chassis 20 arranged on the lower face of the housing 2. The housing will be able to swivel in relation to the base, vice versa. The housing includes a chassis 20 allowing the housing to turn relative to the base 4. Once the self-propelled lifting machine has positioned itself on the staircase, the endless track members 41 will be positioned parallel with the steps of the staircase, the operator of the self-propelled lifting machine will then be able to turn the housing 360 degrees relative to the base 4.

The two endless track members 41 are individually suspended by a number of suspension elements 431,432,433,434 and the suspension elements 431,432,433,434 are connected to said endless track members 41 and the support member 44. The endless track members 41 are actuated by means of an electric motor (not shown) housed within the base 4. The two endless track members 41 extends parallel to the X direction. The chassis 2 comprises on its rear part a contra weight. The housing can be swivelled about an axis R₃ parallel to the Z direction.

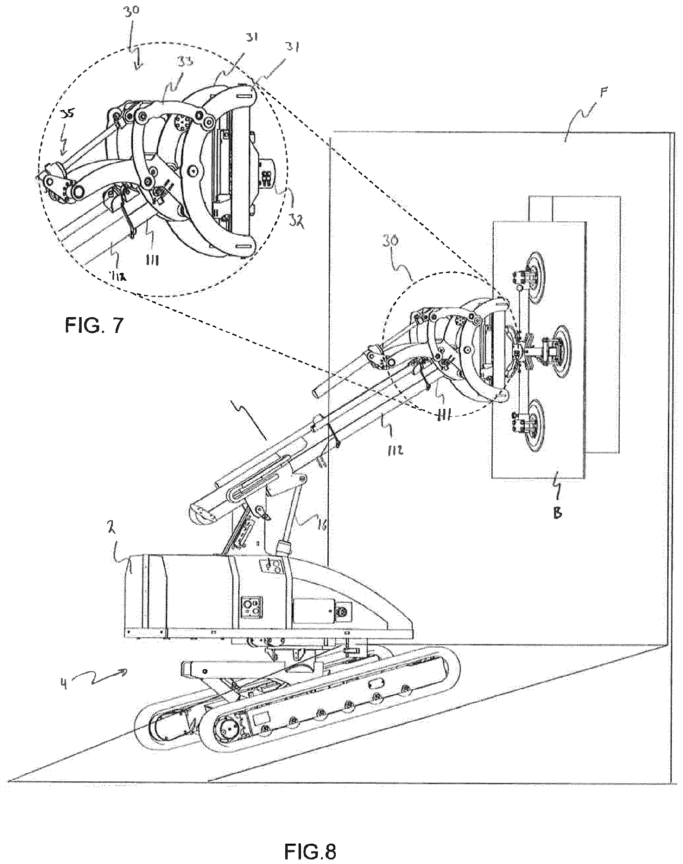

The self- propelled lifting machine is used for lifting and transporting building elements B such as windows facade element to be mounted on a facade F, see FIG. 8. The self-propelled lifting machine is configured to be operated either by using a panel connected to the self-propelled lifting machine or via a remote control unit.

As shown by this arrangement it is possible to enlarge the working range of the self-propelled lifting machine, while reaching at the same time a remarkable height, and a noticeable mounting height as shown in FIG. 4. It is to be observed that, depending on the conditions under which the self-propelled lifting machine will be set on work, it is also possible to conveniently adjust the position of the base relative to an inclination, whereby a further advantage is achieved by increasing the lifting capability.

## Claims

1. A self-propelled lifting machine (10) comprising a housing (2) with a chassis (20) and a base (4) rotatably connected to the chassis (20) of the housing (2), wherein the base (4) includes one or more adjusting means for varying the angle (α) between said base (4) and said housing (2), the lifting machine further comprising a controller configured for selecting and maintaining an angular position of said housing (2) relative to a horizontal plane by means of controlling said adjusting means, the lifting machine (10) further comprising a work tool holder (1) having a lifting boom part (11) being pivotally connected to the housing (2), and a work tool (5) suitable for holding a building element (B), wherein the work tool (5) at least in some operational positions extends beyond the chassis (20) in the horizontal plane.

2. A self-propelled lifting machine according to claim 1, wherein the work tool holder (1) comprises an actuator (16) interposed in between the housing (2) and the work tool holder (1) for controlling the angle between the work tool holder (1) and the housing (2), and wherein the work tool holder (1) comprises a coupling mechanism (30) for coupling the work tool (5) to the boom part (11) at a first end (111) of the work tool holder (1).

3. The self-propelled lifting machine to any of claims 1 and 2, wherein the lifting boom part (11) of the work tool holder (1) includes at least one telescopic second boom part (12) arranged between the first end (111) and a second end (112) of the work tool holder (1) by means of which the distance between the chassis (20) and the work tool (5) may be varied.

4. The self-propelled lifting machine according to any of claims 1 to 3, wherein said base (4) includes a number of endless track members (41) and a support member (44) rotatably connected to the housing (2), wherein said endless track members are pivotably connected to the support member (44).

5. The self-propelled lifting machine to claim 4, wherein two endless track members (41) are individually suspended by a number of suspension elements (431, 432, 433, 434) and the suspension elements (431, 432, 433, 434) being connected to said endless track members (41) and the support member (44).

6. The self-propelled lifting machine to any of the preceding claims 2-5, wherein the work tool (5) includes suction cups being arranged on a fixture having a second coupling part being connectable with a coupling mechanism (30) connected to the work tool holder (1) and the self-propelled lifting machine further including a pneumatic system having a vacuum pump connected to the suction cups and the vacuum pump being used for creating vacuum.

7. The self-propelled lifting machine to any of the preceding claims, wherein an electrical power source supplies the self-propelled lifting machine with electrical power for operating the hydraulic system including a hydraulic pump for supplying hydraulic fluid to the hydraulic actuator (42) for varying the angle between said base (4) and said housing (2).

8. The self-propelled lifting machine according to any of the preceding claims, further comprising a remove control unit for controlling the operation of the lifting machine.

9. Use of a self-propelled lifting machine to any of the preceding claims 1-8, for lifting and transporting building elements (B) such as windows or facade elements, wherein the self-propelled lifting machine is configured to be operated either by using a panel connected to the self-propelled lifting machine or via a remote control unit.
